# EUROPEAN PATENT APPLICATION

(11) **EP 0 769 417 A2**
(43) Date of publication of application: **23.04.1997**
(21) Application number: 96307437.2
(22) Date of filing: 11.10.1996
(51) Int. Cl.: B60Q 1/068

(54) **Two-part housing for vehicle headlamp adjusting mechanism**

(30) Priority: 20.10.1995 US 546367
(71) Applicant: EATON CORPORATION, Cleveland, Ohio 44114-2584 (US)
(72) Inventor: Christian, Todd Howard, Clinton, Ohio 44216 (US); Doll, Andrew Earl, Elyria, Ohio 44035 (US); Franz, Thomas Joseph, North Canton, Ohio 44720 (US); Van Ingen, James Martin, North Canton, Ohio 44720 (US)
(74) Representative: Douglas, John Andrew

(57) **Abstract**

A 90° type vehicle headlamp position adjusting mechanism (100) is provided that features a first housing member (10) and a second housing member (12) that are nested together in a manner enabling the output adjustment shaft (8) to hold them together in sealed engagement without the need for fasteners.

## Description

### INTRODUCTION

This invention relates generally to a 90° gear box type mechanism for adjusting the position of a vehicular headlight or headlamp and more particularly to an improved nested arrangement of a two-part housing for preventing contaminates and the like from entering the mechanism's gear box chamber as well as enabling the output adjusting shaft of the mechanism to hold the housing parts together in nested engagement without the need for fasteners.

### BACKGROUND OF THE INVENTION

Adjusting mechanisms have been used for many years to adjust the position of vehicular headlights so that they can be focused ahead of the vehicle in an effective manner. Vehicular headlamps are characteristically mounted on a movable frame and the adjusting mechanisms are used to position the headlamp up and down and sideways by rotating adjusting screws having threaded nuts of some kind that are secured to a fixed frame of the vehicle with the adjusting screw threaded through the nuts and in contact with the movable frame enabling adjustment of the headlamp position upon rotation of either the nut or the screw depending on the particular design of the mechanism.

Until recently, vehicles were designed such that access to such adjusting mechanism was straight forward without angularity complexities. More recently however, greater complexity and less space availability under the hood has resulted in increased difficulty in providing direct in-line access to the adjusting screws resulting in the development of angular gear drive mechanisms and in particular 90° gear drive mechanisms in which a rotary input shaft is positioned at 90° to the adjusting screw.

It is known to provide some type of protective housing about the gear box of such assemblies to protect the gears and the portion of the rotary input shaft and the output adjustment shaft or screw from damage and contamination.

Examples of vehicle 90° type headlamp position adjuster mechanisms are respectively disclosed in United States Patent Nos. 4,665,469; 4,796,494 and 5,023,759, which are assigned to the assignee of the present invention and the disclosures of which are incorporated herein by reference.

Although all of the 90° type vehicle headlamp adjusters described in the above referenced patents feature two-part housings that enclose the gear assemblies for the adjusters, none of them are able to protect the gears and the portion of the input and output shafts enclosed therein from damage and/or contamination in the manner of the nested two-part housing of the present invention.

Additional examples of gear box housings for vehicle headlamp position adjusters are disclosed in United States Patent Nos. 4,674,018 and 4,713,739, the disclosures of which are incorporated herein by reference. These feature housings that are held together by screw fasteners and do not protect the gears in the manner of the two-part housing of the present invention which are nested together in a manner enabling the output adjusting shaft to hold them together in nested engagement without the need for fasteners.

### SUMMARY OF THE INVENTION

Accordingly, it is an object of this invention to provide a vehicle headlamp position adjusting mechanism.

It is another object of this invention to provide a vehicle headlamp position adjusting mechanism for which the input and output shafts are orthogonally disposed.

It is still another object of the invention to provide a vehicle headlamp position adjusting mechanism employing gears that are protected from damage and contamination by an improved two-part housing in which the parts are nested together to enable the output adjustment shaft to hold them together in nested engagement without the need for fasteners.

### BRIEF DESCRIPTION OF THE DRAWINGS

FIGURE 1 is a side elevation view of an embodiment of the mechanism referenced by numeral 100;
FIGURE 2 is a central cross-sectional view of mechanism 100 of FIGURE 1 taken along view line 2-2- in FIGURE 3;
FIGURE 3 is a top elevational view of mechanism 100 of FIGURES 1 and 2; and
FIGURE 4 is a central cross-section view of mechanism 100 of FIGURES 1-3 taken along view line 4-4 in FIGURE 1.

### SUMMARY OF SOME PREFERRED EMBODIMENTS

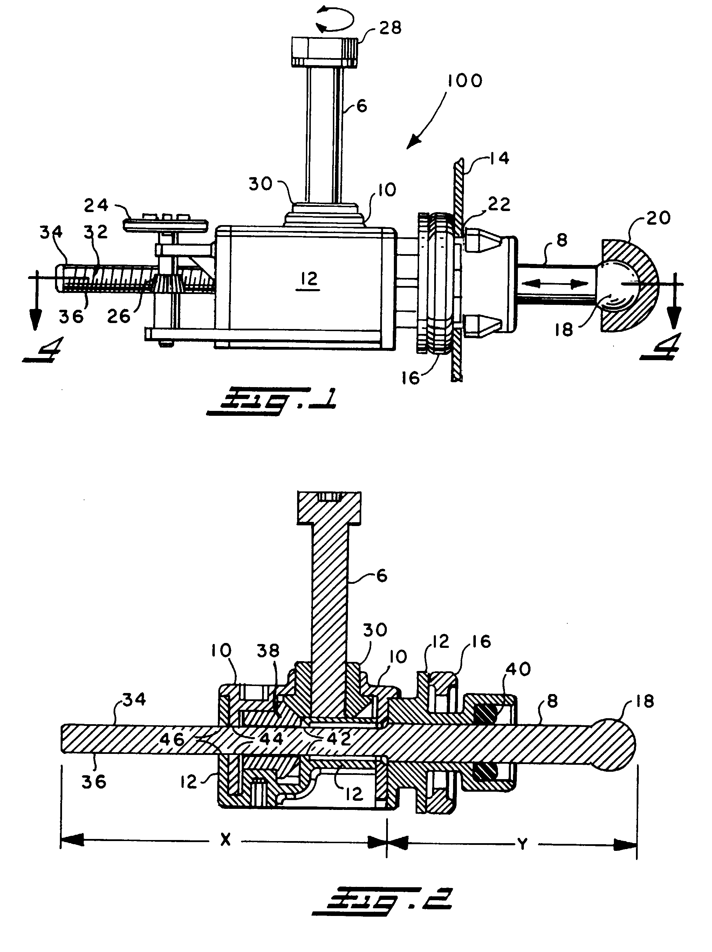

In FIGURE 1, mechanism 100 is a 90° type vehicle headlamp adjusting mechanism having orthogonally disposed rotary drive or input shaft 6 and non-rotating output adjusting shaft 8.

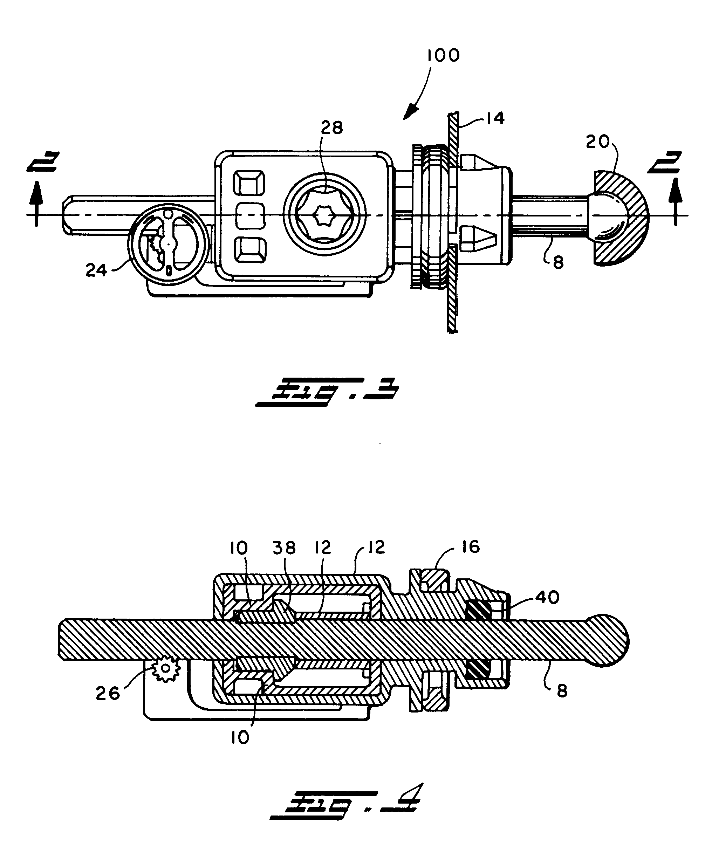

As shown in FIGURE 2, drive shaft 6 is secured to drive gear 30 which is orthogonally disposed to rotary adjusting gear 38. Gears 30 and 38 are supported for rotation by both first housing member 10 and second housing member 12 with housing member 10 being in nested sealed engagement within housing member 12 as shown in FIGURE 4.

Mechanism 100 is secured to a fixed frame of the vehicle, such as referenced by numeral 14, preferably by means of an edge of frame 14 being received into an annular slot 22 in mechanism 100 and held thereagainst by a an annular resilient member such as referenced by numeral 16 in FIGURE 2.

Adjustment shaft 8 has a non-threaded section referenced by the letter "Y" whose end 18 is adapted to engage and move a movable frame 20 such as shown in FIGURES 1 and 3 to which the vehicle headlamp is mounted. Characteristically end 18 has a spherical or ball shape that is received in a cup of frame 20 such that frame 20 can pivot as it is moved by shaft 8.

Adjusting shaft 8 also has a threaded section "X" having threads 32 referenced in FIGURE 1 that are interrupted by non-threaded opposed elongate flat surfaces 34 and 36 shown in FIGURES 1 and 2 with flat surface 34 facing towards drive gear 30 and drive shaft 6.

Adjusting shaft 8 is received through a threaded opening (not referenced) through adjusting gear 38 whose internal threads are threadingly engaged with threads 32 of shaft 8.

The teeth (not referenced) of orthogonally disposed gears 30 and 38 in FIGURE 2 are meshingly engaged so that rotary notion in opposite direction of drive shaft 6, such as by applying a wrench to hex head 28, is translated into opposite non-rotating lineal movement of adjusting, shaft 8 as illustrated by the arrows in FIGURE 1.

The opposite lineal movement of shaft 8 enables shaft 8 to move movable frame 14 in opposite directions and thus enable rotary movement of drive shaft 6 to adjust the aim of the vehicle's headlamp to the position desired.

The mechanism of the invention preferably further includes a device for indicating the position of adjusting shaft 8 relative housing members 10 and 12 which, in turn, are secured to fixed frame 14. One such type of indicator is shown in FIGURES 1 and 3 and features a dial type indicator wheel 24 that is rotated by a gear 26 whose teeth are meshingly engaged with teeth 32 of adjusting shaft 8. As such, wheel 24 is operative to provide a visual indication of the position of shaft 8 for reference and position adjustment purposes.

As shown in FIGURE 2, shaft 8 passes through aligned openings (not referenced) in housing members 10 and 12 that are surrounded by edges of the housing members that are adapted to engage and wipingly seal to prevent contamination from entering into the chambers within housing members 10 and 12 containing gears 30 and 38. Edges 44 of housing member 10 are adapted to engage and wipingly seal the opposed flat surfaces 34 and 36 of adjusting shaft 8 as it slides back and forth during the adjusting process. Additionally, edges 12 and 46 of housing member 12 are adapted to engage and wipingly seal the opposed flat surfaces 34 and 36 of adjusting shaft 8 as it slides back and forth as well as provide a barrier between shafts 6 and 8 in addition to being adapted to support a resilient seal, such as "O" ring 40 shown in FIGURE 2 that is adapted to wipingly seal the non-threaded section "Y" of shaft 8.

The nested arrangement between housing members 10 and 12 with the wiping edges and resilient seal cooperate to provide a two-part sealed housing arrangement that is highly effective in preventing contamination from entering into the chambers within housing members 10 and 12 containing gears 30 and 38 as well as portions of shafts 6 and 8.

The nested arrangement between housing members 10 and 12 is even more advantageous in that fastener(s) are not required to hold them together as can be seen in FIGURE 2 where housing member 10 containing gears 30 and 38 and shaft 6 can be pressed into the open cavity in housing member 12 and then shaft 8 can be inserted into the opening (not referenced) in the right side of housing member 12 shown in FIGURE 2 until it enters the threaded opening in gear 38 after which rotation of shaft 6 can be employed to draw shaft 8 through the remaining aligned opening in housing members 10 and 12 and thus be used to hold housing members 10 and 12 in sealed engagement with each other.

## Claims

1. An improved vehicle headlamp position adjusting mechanism (100) of the type comprising orthogonally disposed drive (6) and adjusting shafts having respective orthogonally disposed and meshingly engaged drive (30) and adjustement gears (38) supported for rotation by first (10) and second (12) housing members that are secured together, said adjusting shaft having a first non-threaded section having an end (18) adapted to engage a movable frame (20) supporting the headlamp and having a second section having a longitudinally extending non-threaded flat surface (34) on at least one side thereof that faces towards the drive gear, said mechanism operative to translate rotary movement of the drive shaft into non-rotary lineal movement of the adjusting shaft for positioning the headlamp, the improvement characterized by said first (10) and second (12) housing members being held together in nested engagement by the adjustment shaft (8).

2. An improved vehicle headlamp position adjusting mechanism (100) of the type comprising orthogonally disposed drive (6) and adjusting shafts (8) having respective orthogonally disposed meshingly engaged drive (30) and adjustment gears (38) supported for rotation by first (10) and second (12) housing members that are secured together, said adjusting shaft having a first non-threaded section having an end (18) adapted to engage a movable frame (20) supporting the headlamp and having a second section having a pair (34, 36) of longitudinally extending non-threaded flat surfaces on opposite sides thereof with one of the flat surfaces (34) facing towards the drive gear, said mechanism operative to translate rotary movement of the drive shaft into non-rotary lineal movement of the adjusting shaft for positioning the headlamp, the improvement characterized by said first and second housing members being held together in nested engagement by the adjusting shaft (8) and adapted to support the drive gear and adjustment gear for rotary movement with said first housing member (10) adapted to engage and wipingly seal the adjustment shaft flat surfaces on at least one side of the adjustment gear and with said second housing member (12) adapted to engage and wipingly seal the adjustment shafts flat surfaces on opposite sides of the adjustment gear and additionally provide a barrier seal between the drive and adjustment shafts as well as support a resilient sealing member (40) adapted to wipingly seal the non-threaded section of the adjusting shaft having the end (18) adapted to engage the headlamp frame.

3. The mechanism of claim 2 wherein the resilient member (40) is a resilient "O" ring.

4. The mechanism of claims 1 or 2 further including means (24) for indicating the position of the adjusting shaft relative the first and second housing members.
